# EUROPEAN PATENT APPLICATION

(11) **EP 3 006 629 A1**
(43) Date of publication of application: **13.04.2016**
(21) Application number: 13885550.7
(22) Date of filing: 30.05.2013
(51) Int. Cl.: E02F 9/14

(54) **PIPE FIXING DEVICE FOR CONSTRUCTION MACHINE**

(71) Applicant: Volvo Construction Equipment AB, 631 85 Eskilstuna (SE)
(72) Inventor: YUN, Seong-Geun, Miryang-si Gyeongsangnam-do 627-881 (KR); SON, Young-Jin, Changwon-si Gyeongsangnam-do 642-768 (KR)
(74) Representative: Zimmermann, Tankred Klaus
(86) International application number: PCT/KR2013/004752
(87) International publication number: WO 2014/193002

(57) **Abstract**

The present invention relates to an improved pipe fixing device for a construction machine, wherein a hydraulic hose that is connected to a side of a hydraulic cylinder of a work apparatus that has a boom of an upper swivel body of the construction machine, is plumbed and assembled to be detachable in phases from an upper and a lower part of a clamp, thereby fixing the movement of the hydraulic hose so to be structurally sound and thereby reducing the required manpower. The pipe fixing device comprises: a hose clamp comprising a pair of fixing parts that are attached to the side of an upper swivel body, a first connection part supporting at pre-determined intervals a plurality of first array hoses that are formed extending in-between the pair of fixing parts and that arrive from a lower part, and a second connection part supporting at pre-determined intervals a plurality of second array hoses; a guide that is coupled to the hose clamp so as to restrict the movement of the plurality of first array hoses; and a cover that is fixed on the guide.

## Description

### TECHNICAL FIELD

The present invention relates to a pipe fixing device for a construction machine. More particularly, the present invention relates to an improved pipe fixing device for a construction machine in which hydraulic hoses connected to a hydraulic cylinder side of a work apparatus including a boom are plumbed and assembled separately at upper and lower portions of a hose clamp on an upper swing structure of the construction machine so that the hydraulic hoses can be firmly fixed structurally and the number of works required can be reduced.

### BACKGROUND OF THE INVENTION

In general, a construction machine including an excavator provides hydraulic fluid through the operation of a hydraulic pump installed at an engine room of an upper swing structure so that a hydraulic cylinder of a boom, an arm, a bucket, or an option apparatus is driven by the oil pressure of the hydraulic fluid.

For the supply and delivery of the hydraulic fluid, plural hydraulic hoses are complicatedly connected to the upper swing structure and the work apparatus from the hydraulic pump. In addition, when the option apparatus is attached to a front end of the arm, it is required that a separate hydraulic hose should be additionally connected to the option apparatus.

There frequently occurs the case where the hydraulic hoses connected to the work apparatus or the option apparatus are demanded for the plumbing and assembly required. However, in the case of such hydraulic hoses, a plumbing and assembly space is insufficient, leading to a great increase in the number of the assembly and work processes, and the state of an outer appearance the hydraulic hoses is degraded or a twisting phenomenon occurs frequently after completion of the arrangement of the hydraulic hoses.

Thus, for the smooth drive operation of the work apparatus and the option apparatus, it is required that the plumbing and layout of the hydraulic hoses should be maintained properly. In addition, it is required that a certain point where the hydraulic hoses are disposed, for example, the plumbing operation should be performed through a clamp device at a certain position adjacent to a base part of the boom or the base parts of the arm and the arm cylinder.

Moreover, minimization of work manpower, for example, the design of a clamp for work by one person is needed to reduce the number of assembly processes excessively occurring during a plumbing work. In addition, the design of a structure and durability are needed which enable proper restriction of the vertical or horizontal movement of the hydraulic hoses, which occurs due to the operation of the work apparatus and the option apparatus after completion of the arrangement of the hydraulic hoses on the clamp.

As an example of a hydraulic piping structure for a work apparatus, Korean Patent Laid-Open Publication No. 10-2004-0022162 (laid out on March 11, 2004) discloses a hydraulic piping structure for a work apparatus which is well-known in the art.

The conventional hydraulic piping structure has been proposed to solve problems in that a hose portion that is bent arcuately is moved while touching the top and bottom wall surfaces and the left and right wall surfaces, leading to displacement, and thus the damage and abrasion of the hydraulic hoses is accelerated, and in that the hydraulic hoses are tangled or touch with each other, leading to deterioration of durability of the hydraulic hoses. In the above hydraulic piping structure in which each hydraulic hose is connected to each hydraulic cylinder via a swing bracket, the swing bracket includes a first pipe discharge passage for allowing a hydraulic hose for a boom cylinder to be discharged from the inner space of the swing bracket to the outer space of a boom cylinder attachment part therethrough, and a second pipe discharge passage for allowing a hydraulic hose for an arm cylinder and a work apparatus cylinder to be discharged to the outer space of a boom attachment part therethrough.

However, the conventional hydraulic piping structure still entails a problem in that a number of operators need a complicated work to fix or plumb hydraulic hoses during the plumbing work, leading to a great increase in the number of the assembly processes. In addition, the conventional hydraulic piping structure encounters a secondary problem in that when the arrangement and layout of the hydraulic hoses of the work apparatus and the option apparatus are adjusted or the number of the hydraulic hoses increases for the specification or compatibility of the construction machine, there occur twisting and displacement of the hydraulic hoses and durability is deteriorated.

### SUMMARY OF THE INVENTION

Accordingly, the present invention has been made to solve the aforementioned problems occurring in the prior art, and it is an object of the present invention to provide a pipe fixing device for a construction machine in which a plurality of first alignment hoses and a plurality of second alignment hoses disposed on a clamp are structurally plumbed separately in a stepwise manner to obtain increased fixing capability so that the assembly time and the number of work processes can be reduced.

Another object of the present invention to provide a pipe fixing device for a construction machine in which a guide is separately attached to a main body of a hose clamp structurally so that the vertical movement and displacement of alignment hoses can be restricted, and a plurality of first alignment hoses and a plurality of second alignment hoses can be plumbed and assembled in a separate process, respectively.

### TECHNICAL SOLUTION

To achieve the above objects, in accordance with an embodiment of the present invention, there is provided a pipe fixing device for a construction machine, including:
a hose clamp including a pair of opposed fixing parts attached to one side of an upper swing structure, a first support part formed extending between the fixing portions and configured to support a plurality of first alignment hoses seated therein from the bottom at predetermined intervals, and a second support part formed to be spaced apart from the first support part and configured to support a plurality of second alignment hoses seated therein from the top at predetermined intervals;
a guide including a pair of opposed clamp fixing parts and fixedly coupled to the hose clamp to restrict the movement of at least one of the first alignment hoses in a state where the at least one of the first alignment hoses is arranged in the first support part; and
a cover securely fixed to the guide to restrict the movement of at least one of the second alignment hoses in a state where the at least one of the second alignment hoses is arranged in the second support part.

In accordance with an embodiment of the present invention, the hose clamp may include a guide seating part having a stepped recess formed thereon to fix the guide to the hose clamp.

In addition, in the pipe fixing device for a construction machine in accordance with the present invention, the guide may include at one cover fixing projection formed thereon to project between the clamp fixing parts.

Preferably, the fixing parts of the hose clamp may be attached to one side of a base part of a boom.

In accordance with another embodiment of the present invention, the fixing parts of the host clamp may be attached to one side of a base part of an arm cylinder.

In the pipe fixing device for a construction machine in accordance with the present invention, the cover may further include a foreign substance blocking part.

### ADVANTAGEOUS EFFECT

The pipe fixing device for a construction machine in accordance with an embodiment of the present invention as constructed above has the following advantages.

In assembling hoses connected to the work apparatus and the option apparatus on the upper swing structure, the arrangement and assembly of the plurality of hydraulic hoses which are used is performed in a process in which the first alignment hoses and the second alignment hoses are arranged separately so that the assembly defectives can be minimized, the assembly time can be reduced, and the operator can easily perform an assembly process personally.

### BRIEF DESCRIPTION OF THE DRAWINGS

The above objects, other features and advantages of the present invention will become more apparent by describing the preferred embodiments thereof with reference to the accompanying drawings, in which:
Fig. 1 is an exploded perspective view schematically showing a pipe fixing device for a construction machine in accordance with the present invention;

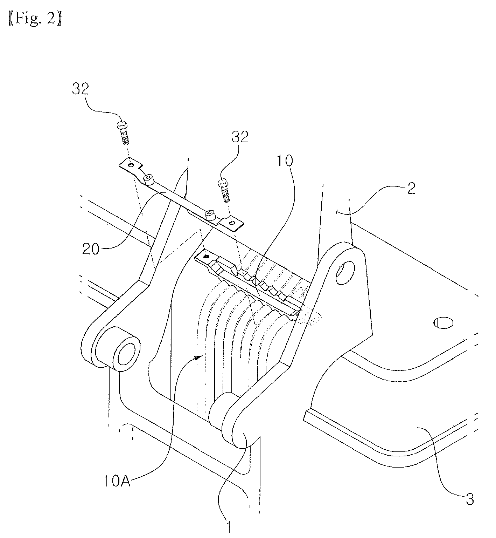

Fig. 2 is a perspective view showing an assembled state in which first alignment hoses are preferentially disposed on a hose clamp to perform a pipe assembly work in a stepwise manner in accordance with the present invention;

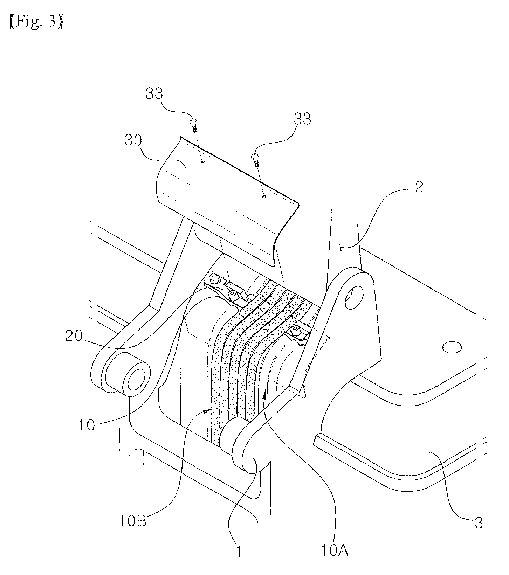

Fig. 3 is a perspective view showing an assembled state in which first alignment hoses are preferentially disposed and then second alignment hoses are disposed on a hose clamp to perform a pipe assembly work in a stepwise manner in accordance with the present invention;
Fig. 4 is a perspective view showing an assembled state in which first alignment hoses and second alignment hoses are fixed to a boom base part in a stepwise manner in accordance with the present invention; and
Fig. 5 is a schematic perspective view showing an example of an excavator to which a pipe fixing device for a construction machine in accordance with the present invention is applied.

### DETAILED DESCRIPTION OF THE INVENTION

Hereinafter, the preferred embodiments of the present invention will be described in detail with reference to the accompanying drawings.

The matters defined in the description, such as the detailed construction and elements, are nothing but specific details provided to assist those of ordinary skill in the art in a comprehensive understanding of the invention, and the present invention is not limited to the embodiments disclosed hereinafter.

In the drawings, for the sake of a clearer understanding of the present invention, sizes or shapes of elements illustrated in the drawings may be exaggerated for clarity and convenience of explanation. Also, the following terms particularly defined in consideration of the configuration and function of the present invention may vary according to an intention of a user or an operator or according to custom. Therefore, definition of such terms should be made based on overall contents of the specification.

Here, the terms or words used in the specification and the claims of the present invention should not be construed as being typical or dictionary meanings, but should be construed as meanings and concepts conforming to the technical spirit of the present invention on the basis of the principle that an inventor can properly define the concepts of the terms in order to describe his or her invention in the best way.

Prior to the description, a reference numeral 10 denotes a hose clamp in accordance with the present invention, a reference numeral 11 denotes a first support part of the hose clamp, a reference numeral 12 denotes a second support part of the hose clamp, a reference numeral 14 denotes a guide seating part of the hose clamp, a reference numeral 20 denotes a guide, reference numeral 24 denotes a cover fixing projection of the guide, and a reference numeral 30 denotes a cover.

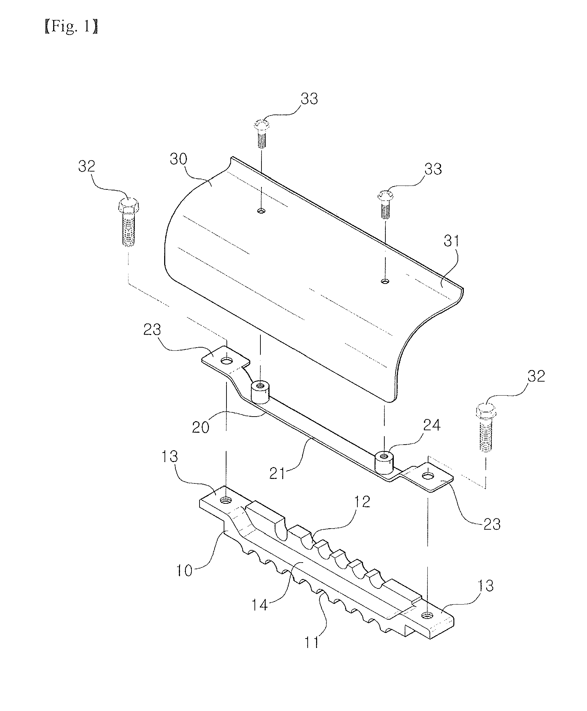

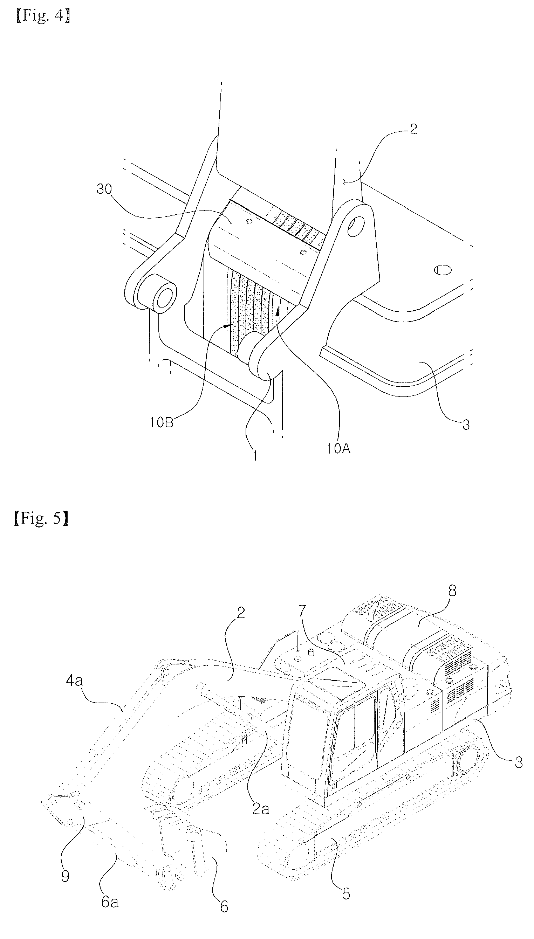

As shown in Figs. 1 and 4, the pipe fixing device for a construction machine 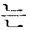 upper swing structure in accordance with an embodiment of the present invention can be installed at a base part of a boom 2 or an arm 4 provided in an upper swing structure in various manners.

For example, typically, in the construction machine, hydraulic fluid is supplied to a boom cylinder 2a, an arm cylinder 4a, and a bucket cylinder 6a from a hydraulic pump included in an engine room 8 disposed at the rear of an operator's cab through a plurality of hydraulic hoses, i.e., first alignment hoses 10A and the second alignment hoses 10B. In addition, an operator can easily plumb and assemble the first alignment hoses and the second alignment hoses separately in a stepwise process.

A pipe fixing device for a construction machine in accordance with the present invention includes: a hose clamp 10 including a pair of opposed fixing parts 13 attached to one side of an upper swing structure 3, a first support part 11 formed extending between the fixing portions 13 and configured to support a plurality of first alignment hoses 10A seated therein from the bottom at predetermined intervals, and a second support part 12 formed to be spaced apart from the first support part 11 and configured to support a plurality of second alignment hoses 10B seated therein from the top at predetermined intervals; a guide 20 including a pair of opposed clamp fixing parts 23 and fixedly coupled to the hose clamp 10 to restrict the movement of at least one of the first alignment hoses 10A in a state where the at least one of the first alignment hoses 10A is arranged in the first support part 11; and a cover 30 securely fixed to the guide 20 to restrict the movement of at least one of the second alignment hoses 10B in a state where the at least one of the second alignment hoses 10B is arranged in the second support part 12.

In accordance with an embodiment of the present invention, the hose clamp 10 includes a guide seating part 14 having a stepped recess formed thereon to fix the guide 20 to the hose clamp. In addition, the guide 20 includes a pair of opposed cover fixing projection 24 formed thereon to project between the clamp fixing parts 23.

Preferably, the fixing parts 13 of the hose clamp 10 are attached to one side of a base part of a boom 2. In accordance with another embodiment of the present invention, the fixing parts 13 of the host clamp 10 are attached to one side of a base part 9 of an arm cylinder 4a.

Meanwhile, in the pipe fixing device for a construction machine in accordance with the present invention, the cover 30 includes a foreign substance blocking part.

The operation principle of the pipe fixing device for a construction machine in accordance with the present invention will be described hereinafter with reference to the accompanying drawings based on an embodiment in which the fixing parts 13 of the hose clamp 10 are installed at a base part of the boom 2.

In the case where the hose clamp 10 of the pipe fixing device for a construction machine in accordance with the present invention is assembled to the base part of the boom 2 of a general construction machine, the pair of opposed fixing parts 13 formed at the hose clamp 10 are installed at the base part of the boom 2 disposed between a pair of opposed boom fixing brackets 1 of the upper swing structure 3. In this case, the first alignment hoses 10A, for example, hydraulic hoses for a work apparatus, i.e., an attachment, which are arranged at predetermined intervals, are supported in a close contact manner by the first support part 11 having a plurality of support surfaces formed thereon in an arcuate shape.

In this process, an operator can adjust the arrangement position of the first alignment hoses 10A on the first support part 11. When a pair of opposed first fastening members 32 are fastened to the pair of opposed fixing parts 13 of the hose clamp 10 after the completion of the adjustment of the arrangement position of the first alignment hoses 10A, the hose clamp 10 can be securely fixed to the base part of the boom 2.

Preferably, prior to the fixation of the hose clamp 10 to the base part of the boom 2, the clamp fixing parts 23 of the guide 20 are seated on the fixing part 13 of the hose clamp 10 and a main body 21 of the guide 20 is mounted on the guide seating part 14 of the hose clamp 10. In this case, the first fastening members 32 are fixedly fastened to the base part of the boom 2 in a state where the fixing parts 13 of the hose clamp 10 and the clamp fixing parts 23 of the guide 20 are aligned with each other.

Thus, the first alignment hoses 10A are fixedly held in the first support part 11 formed on the underside of the hose clamp 10 so that the horizontal and vertical movement of the first alignment hoses 10A is restricted. In this case, the main body 21 of the guide 20 additionally forms a hose supporting force in the guide seating part 14 of the hose clamp 10 that the vertical movement or displacement of the first alignment hoses 10A at a position adjacent to a central portion in the longitudinal direction of the hose clamp 10 can be limited.

In the meantime, the second support part 12 of the hose clamp 10 is void, and the operator can seat the second alignment hoses 10B on the second support part 12.

In this case, the second alignment hoses 10B, for example, hydraulic hoses for an option apparatus, which are arranged at predetermined intervals, are insertingly seated in the second support part 12 having a plurality of support surfaces formed thereon in an arcuate shape.

In this process, the operator can adjust the arrangement position of the second alignment hoses 10B on the second support part 12. The operator places the cover 300 on the second alignment hoses 10B so that the inner surface of the cover 30 presses the top surfaces of the second alignment hoses 10B after the completion of the adjustment of the arrangement position of the second alignment hoses 10B. Subsequently, the second fastening members 33 are screwably fastened to screw holes of the cover fixing projections 24 formed protrudingly on the main body 21 of the guide 20 through fastening holes of the cover 30.

Thus, the second alignment hoses 10B are fixedly held in the second support part 12 formed on the top surface of the hose clamp 10. Ultimately, the first alignment hoses 10A are fixedly held in the first support part 11 of the hose clamp 10, and then the second alignment hoses 10B are fixedly held in the second support part 12 of the hose clamp 10 so that the operator does not need a separate tool and a work for fixing the plurality of alignment hoses and components, and thus the first alignment hoses 10A and the second alignment hoses 10B can be easily assembled and installed in a stepwise manner.

Meanwhile, in the assembly of the cover 30 in accordance with the present invention, when the foreign substance blocking part 31 is provided, rock fragments or foreign substances are further blocked from infiltrating into the fixed positions of the first alignment hoses 10A and the second alignment hoses 10B. For example, when rock fragments enter the hose clamp 10 side with them bouncing or infiltrate into the hose clamp 10 side from the top, the main body of the hose clamp 10 formed as a rubber member as well as the alignment hoses in which fluid flows may be damaged and the arrangement or alignment state of the first alignment hoses 10A and the second alignment hoses 10B may be deteriorated. In this case, the cover 30 including the foreign substance blocking part 31 protect the hose clamp 10 and the first and second alignment hoses 10A and 10B from breakage or damage.

In various embodiments of the present invention, the fixing parts 13 of the hose clamp 10 may be installed in proximity to the base part 9 side of an arm cylinder 4a, or may be installed in proximity to a hose connection part of a bucket cylinder 6a. In this case, the first alignment hoses 10A are fixedly held in the first support part 11 of the hose clamp 10, and then the second alignment hoses 10B are fixedly held in the second support part 12 of the hose clamp 10 so that the operator does not need a separate tool and a work for fixing the plurality of alignment hoses and components. The operation principle in which the first alignment hoses 10A and the second alignment hoses 10B can be easily assembled and installed in a stepwise manner is the same as described above, and thus, a detailed description thereof will be omitted to avoid redundancy.

### INDUSTRIAL APPLICABILITY

In accordance with the pipe fixing device for a construction machine of the present invention as constructed above, in assembling hoses connected to the work apparatus and the option apparatus on the upper swing structure, the arrangement and assembly of the plurality of hydraulic hoses which are used is performed in a process in which the first alignment hoses and the second alignment hoses are arranged separately so that the assembly defectives can be minimized, the assembly time can be reduced, and a convenience of the operator can be improved.

While the present invention has been described in connection with the specific embodiments illustrated in the drawings, they are merely illustrative, and the invention is not limited to these embodiments. It is to be understood that various equivalent modifications and variations of the embodiments can be made by a person having an ordinary skill in the art without departing from the spirit and scope of the present invention. Therefore, the true technical scope of the present invention should not be defined by the above-mentioned embodiments but should be defined by the appended claims and equivalents thereof.

## Claims

1. A pipe fixing device for a construction machine, comprising:
a hose clamp including a pair of opposed fixing parts attached to one side of an upper swing structure, a first support part formed extending between the fixing portions and configured to support a plurality of first alignment hoses seated therein from the bottom at predetermined intervals, and a second support part formed to be spaced apart from the first support part and configured to support a plurality of second alignment hoses seated therein from the top at predetermined intervals;
a guide including a pair of opposed clamp fixing parts and fixedly coupled to the hose clamp to restrict the movement of at least one of the first alignment hoses in a state where the at least one of the first alignment hoses is arranged in the first support part; and
a cover securely fixed to the guide to restrict the movement of at least one of the second alignment hoses in a state where the at least one of the second alignment hoses is arranged in the second support part.

2. The pipe fixing device according to claim 1, wherein the hose clamp comprises a guide seating part having a stepped recess formed thereon to fix the guide to the hose clamp.

3. The pipe fixing device according to claim 2, wherein the guide comprises at one cover fixing projection formed thereon to project between the clamp fixing parts.

4. The pipe fixing device according to claim 1 or 2, wherein the hose clamp is formed as a rubber member.

5. The pipe fixing device according to claim 1 or 2, wherein the fixing parts of the hose clamp are attached to one side of a base part of a boom.

6. The pipe fixing device according to claim 5, wherein the fixing parts of the host clamp are attached to one side of a base part of an arm cylinder.

7. The pipe fixing device according to claim 5, wherein the cover further comprises a foreign substance blocking part.
